Europäisches Patentamt

(19) **European Patent Office** (11) Publication number: **0 177 120**

Office européen des brevets **B1**

(12) **EUROPEAN PATENT SPECIFICATION**

(45) Date of publication of patent specification: **19.09.90** (51) Int. Cl.⁵: **B 26 B 15/00, C 14 B 19/00, C 14 B 15/02, B 23 Q 11/10**

(21) Application number: **85304666.2**

(22) Date of filing: **01.07.85**

(54) Shearing apparatus.

(30) Priority: **30.06.84 GB 8416705**

(43) Date of publication of application:
**09.04.86 Bulletin 86/15**

(45) Publication of the grant of the patent:
**19.09.90 Bulletin 90/38**

(84) Designated Contracting States:
**CH DE FR GB LI**

(56) References cited:
**FR-A-1 124 691**
**SU-A- 151 218**
**SU-A- 159 741**
**US-A- 683 643**
**US-A-1 515 555**

(73) Proprietor: **LISTER SHEARING EQUIPMENT LIMITED**
**15 Gosditch Street**
**Cirencester Gloucestershire, GL7 2AG (GB)**

(72) Inventor: **Williams, Alun**
**Lister Shearing Equipment Ltd. 15 Gosditch St.**
**Cirencester Glos. GL7 2AG (GB)**

(74) Representative: **Adkins, Michael et al**
**Withers & Rogers 4 Dyer's Buildings**
**Holborn London, EC1N 2JT (GB)**

Courier Press, Leamington Spa, England.

## Description

The invention relates to shearing apparatus (which term includes clipping apparatus) particularly, but not exclusively, of the kind used for shearing the fine hair of animals such as horses or cattle.

Typical apparatus of the above kind comprises a hand-piece containing an electric motor and having blades comprising a cutter and comb on a shearing head carried by a forward section of the hand-piece. The electric motor drives the cutter which is co-operable with the comb. In order to cool the motor, air may be drawn into the hand-piece by a fan on the motor and discharged through outlet vents. Hitherto, the outlet vents have caused the air to be discharged transversely of the handpiece e.g. radially into the surrounding air. When clipping an animal, the clippings frequently fall onto the handpiece particularly when working in an upward direction. When the hair passes over such outlet vents in the handpiece, escaping air tends to blow the clippings towards the face of the user which can be an unpleasant experience and can present a danger to the eyes. It is also desirable to cool drive transmission gearing by which drive is transmitted to the cutter.

In US—A—1 515 555 it has been proposed to discharge air forwardly but the problem of cooling transmission gearing is not addressed therein.

In SU—151 218 there is disclosed shearing apparatus according to the preamble of claim 1. Whilst forwardly facing vents are described therein the air does not serve to cool transmission gearing and forward movement of the discharged air for reducing the likelihood of air being blown into the face of the user is not disclosed.

An object of the present invention is to provide shearing apparatus which reduces the likelihood of air being blown into the face of the user and which enables the air to cool the drive transmission gearing.

According to the invention there is provided shearing apparatus comprising a handpiece including a housing, a shearing head having blades and carried by a forward section of the housing, a motor within the housing, a transmission gearing arranged to transmit drive from the motor to the shearing head, means drivable by the motor for forcing air into the housing and forwardly facing outlet means at the underside of the handpiece through which air forced into the housing is discharged, characterised in that air forced into the housing passes over the transmission gearing and is discharged through the forwardly facing outlet means, the outlet means being positioned immediately behind the blades of the shearing head whereby the air discharged through outlet means is directed forwardly beneath the blades.

By discharging the air forwardly in that way, clipped hair is not blown toward the user, even when working upwardly. Also, the air cools the transmission gearing and the air discharged forwardly beneath the blades facilitates cooling of the cutter and comb.

Preferably the air follows two paths to the outlet means, one path enabling some air to pass directly to the outlet means and the other path directing air towards the outlet means so that it passes over the transmission.

The outlet means may comprise two outlet passages arranged side-by-side. The two passages may be separated by a divider.

Preferably the shearing head is mounted on an adaptor, the adaptor is mounted on the forward end of the housing and houses the transmission gearing, and the interior of the adaptor received the air forced into the housing.

The housing may define a plurality of outlet ports which introduce air into the interior of the adaptor at a number of different positions.

The adaptor may be formed as a one piece unit.

Preferably the means for forcing air into the handpiece causes the air to pass over the motor.

The motor may be an electric motor.

Shearing apparatus in accordance with the invention will now be described by way of example with reference to the accompanying drawings in which:

Figs. 1 to 3 show from left to right, front, side and rear views of respective known types of clipper;

Fig. 4 is an elevation of a clipper in accordance with the present invention shown partly in axial cross section;

Fig. 5 is an axial cross section through an adaptor of a handpiece of the apparatus shown in Fig. 4;

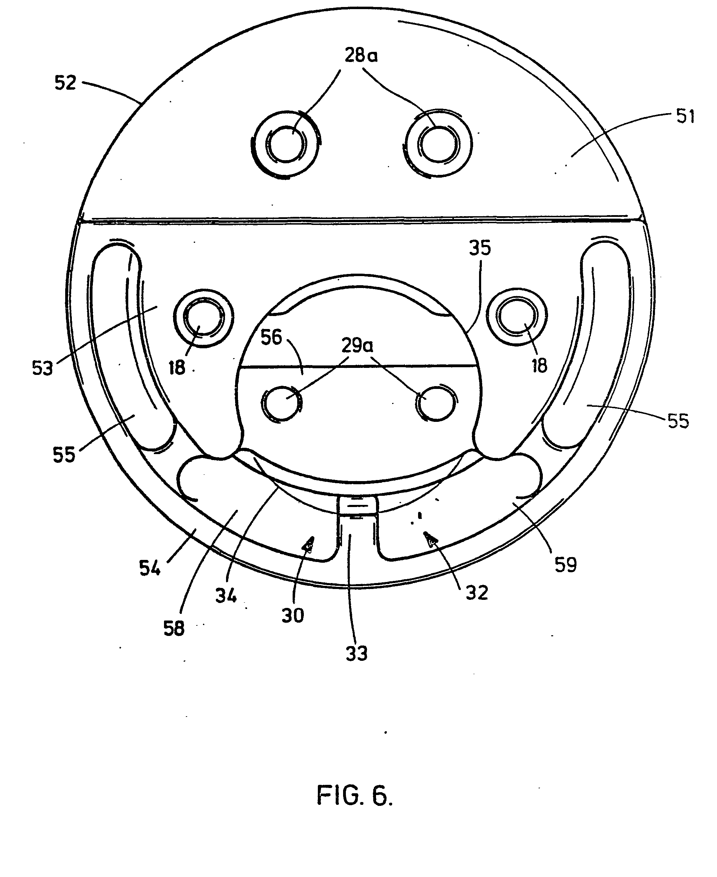

Fig. 6 is an end view of the adaptor shown in Fig. 5 looking in the direction of arrow VI in Fig. 5; and

Fig. 7 is a cross section of the adaptor shown in Fig. 6 on the line VII—VII in Fig. 6.

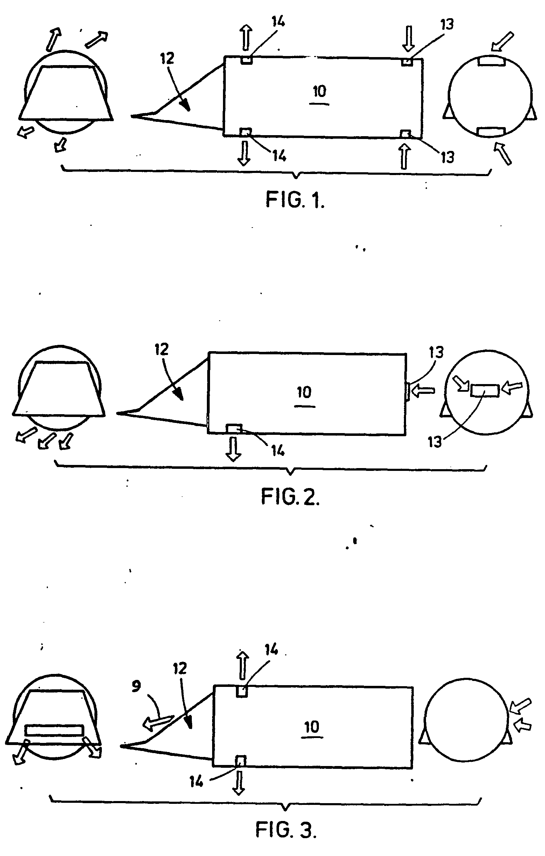

Referring first to Fig. 1, a handpiece 10 carries a clipper head 12 at its front end and houses an electric motor (not shown). The electric motor drives a fan which draws in air through inlets 13 in the handpiece and discharges the air (indicated by arrows) through outlets 14 in a direction transverse to the handpiece as shown in the front view.

In Figs. 2 and 3, parts corresponding to parts shown in Fig. 1 carry the same reference numerals.

Fig. 2 shows the way in which air is drawn in axially of the handpiece and is, again, discharged in a direction transverse to the handpiece through an outlet in the underside of the handpiece.

Fig. 3 is slightly different in that whilst air is discharged transversely of the handpiece, some of the air is also discharged forwardly over the top of clipper head 12 as indicated at 9.

With embodiments shown in Figs. 1 to 3, the discharged air tends to blow clipped hair falling on to the handpiece to one side which can cause the clippings to be blown towards the face of the user and possibly into the user's eyes. Whilst the clipper shown in Fig. 3 directs some of the air forwardly, a large proportion of the air is still discharged transversely and clippings falling onto the handpiece are likely to be blown towards the user.

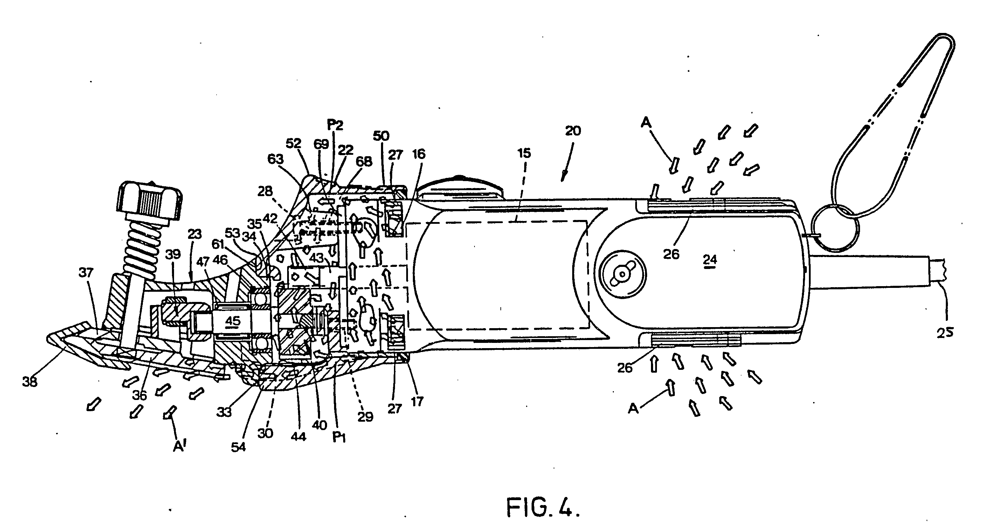

The clipper in accordance with the invention shown in Fig. 4 comprises a cylindrical handpiece 20 including an adaptor 22 at its forward end. A clipper head 23 is mounted on the front of the adaptor. The handpiece includes a housing 24 containing an electric motor 15 which receives electric current through a lead 25. The housing 24 is formed with a plurality of inlet vents 26 through which a fan 16 driven by the electric motor draws air A into the housing to cool the motor. The housing is formed with four circumferentially spaced outlet ports 27 (two of which are shown) through which the cooling air is discharged by the fan.

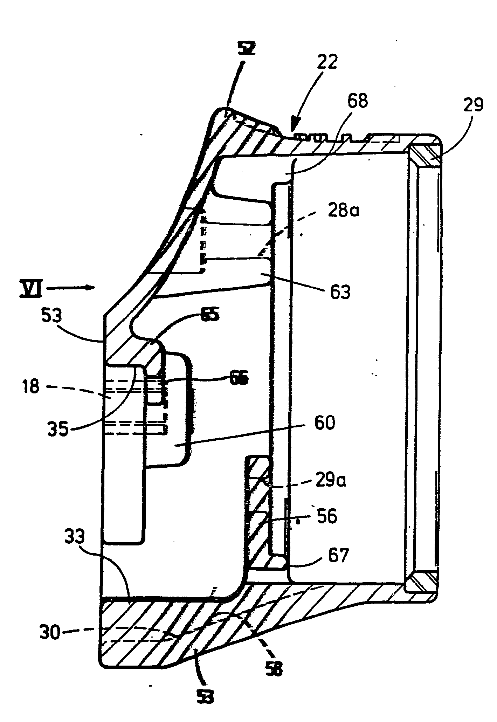

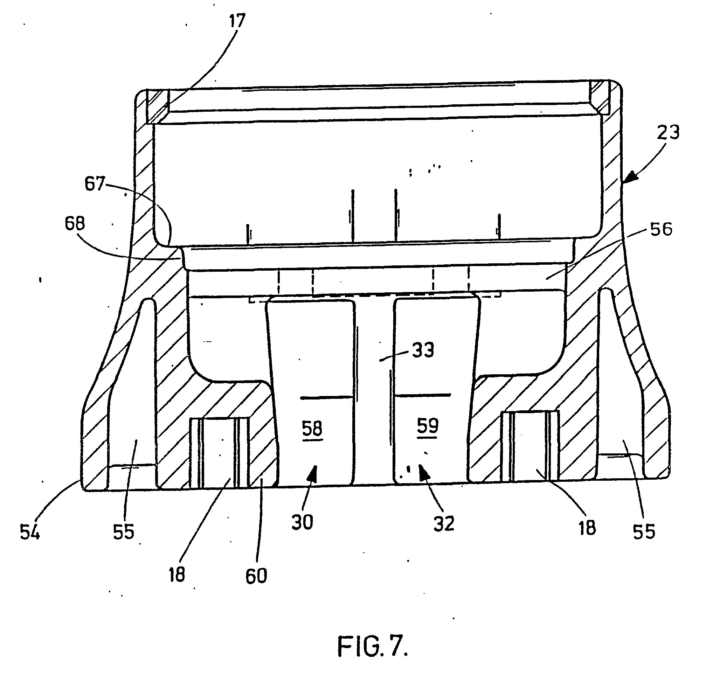

The adaptor 22 is a hollow tubular element formed as a one piece moulding or casting. The adaptor has a cylindrical wall portion 50 which locates around the left hand end of the housing 24, a sealing ring 17 being disposed therebetween. The wall 50 sweeps outwardly as apparent from Figs. 4, 5 and 7 to form an upper portion 52, which includes a transverse convex face 51 terminating at a vertical surface 53, and a lower portion 54 which also terminates at the vertical abutment surface 53. Two blind recesses 55 are produced in the moulding or casting in order to reduce the amount of material used to form the adaptor. The lower portion 54 is integral with a wall 56 extending across the adaptor, an arcuate opening 57 being defined between the lower edge of the wall and two adjacent concave surfaces 58, 59 of the lower portion. A vertical wall 33 lies between surfaces 58, 59. Two bosses 60 are formed on the lower portion of the adaptor and have inserts therein formed with screw threaded bores 18. Two bosses 63 are formed on the upper portion of the adaptor having through bores 28a therein. The wall 56 has through bores 29a therein. The vertical surface 53 is formed on a wall having a part cylindrical extension 65. The adaptor has an internal peripheral shoulder 67 which extends part way around the interior to leave a gap 68 at the upper interior region of the adaptor. The shoulder 67 is recessed to form a counterbore 68. The left hand end of the housing 24 has a projection 69 which locates in the counterbore 68 and the left hand end of the housing abuts shoulder 67.

The adaptor 22 is secured to the housing 24 by two pairs of bolts 28, 29 (one bolt only of each pair being shown) which extend through the bores 28a, 29a and screw into the housing 24. The clipper head 23 is secured to the adaptor by means of bolts (not shown) which screw into the bores 18; an abutment surface 51 on the head engaging surface 53 of the adaptor. The clipper head has a spigot 34 which fits within the part-cylindrical extension 65, and lies against the upper edge of divider wall 33. The regions between the surfaces 58, 59, wall 33 and spigot 34 constitute two respective air outlet passages 30, 32.

Air discharged through the outlet ports 27 enters the interior of the adaptor 22 and exits through outlet passages 30, 32. Some of the air reaches the outlets 30, 32 along one path P1 defined by the opening 57 and the remainder takes another path P2 which leads to the outlets 30, 32 by passing through the gap 68 and down through the adaptor as shown by the arrows. The outlet passages 30, 32 cause the air as indicated A' to discharge forwardly beneath a comb 36 of the clipper head 23, the comb co-operating with a reciprocable cutter 37. In Fig. 1 a removable protective cover 38 is shown on the cutter and comb 36, 37. The air entering the adaptor from the outlet ports 27 keeps the pressure in the adaptor above ambient pressure thereby ensuring that clippings do not enter the adaptor. Also the air leaving the outlets 30, 32 has a cooling effect on the cutter and comb.

The comb is reciprocated by means of an eccentric 39 which is driven by transmission gearing 40 housed with the adaptor 22. The gearing 40 comprises a gear 42 on an output shaft 45 of the motor 15 which meshes with a larger gear 44 rotatably fast with a drive shaft 45 for the eccentric 39. The shaft 45 is journalled in a main ball bearing 46 and a needle roller bearing 47 on the clipper head. As well as forming a cooling stream for the electric motor, the air discharged from ports 27 and passing through gap 68 also cools the gearing 40 before leaving the outlet passages 30, 32.

By discharging forwardly the air drawn in through inlets 26 through the outlet passages 30, 32 any clippings which fall backwards onto the handpiece when clipping in an upward direction will not encounter any transversely discharged air and so the problem of clippings being blown into the face of the user as encountered hitherto is avoided.

Although the apparatus in accordance with the invention is particularly applicable to clippers of the type used for, say, clipping horses and cattle, the invention may also be useful in helping to clear clipped wool resulting from sheep shearing although the problem of clipped wool is not so acute as air-blown clipped hairs resulting from horse and cattle clipping.

**Claims**

1. Shearing apparatus comprising a handpiece (20) including a housing (24), a shearing head (23) having blades (37, 38) and carried by a forward section of the housing, a motor (15) within the housing, a transmission gearing (40) arranged to transmit drive from the motor (15) to the shearing head (20), means (16) drivable by the motor (15) for forcing air into the housing and forwardly facing outlet means (30, 32) at the underside of the handpiece through which air forced into the housing is discharged, characterised in that air forced into the housing passes over the transmission gearing and is discharged through the forwardly facing outlet means (30, 32), the outlet means being positioned immediately behind the blades (37, 38), of the shearing head whereby the air discharged through outlet means is directed forwardly beneath the blades.

2. Shearing apparatus according to Claim 1 characterised in that air follows two paths (P1, P2) to the outlet means, one path (P1) enabling some air to pass directly to the outlet means and the other path (P2) directing air towards the outlet means (30, 32) so that it passes over the transmission (40).

3. Shearing apparatus according to Claim 1 or 2 characterised in that the outlet means comprises two outlet passages (30, 32) arranged side-by-side.

4. Shearing apparatus according to Claim 3 characterised in that the two passages (30, 32) are separated by a divider (33).

5. Shearing apparatus according to any preceding claim characterised in that the shearing head (23) is mounted on an adaptor (22), the adaptor is mounted on the forward end of the housing and houses the transmission gearing, and the interior of the adaptor receives the air forced into the housing.

6. Shearing apparatus according to Claim 5 characterised in that the outlet means (30, 32) is defined between the adaptor (22) and a portion of the shearing head (23).

7. Shearing apparatus according to Claim 5 or 6 characterised in that the housing (20) defines a plurality of outlet ports (27) which introduce air into the interior of the adaptor (22) at a number of different positions.

8. Shearing apparatus according to any of preceding Claims 5 to 7 characterised in that the adaptor (22) is formed as a one-piece unit.

9. Shearing apparatus according to any preceding Claim characterised in that the means (16) for forcing air into the handpiece causes the air to pass over the motor (15).

10. Shearing apparatus according to any preceding claim characterised in that the motor is an electric motor (15).

**Patentansprüche**

1. Scherapparat mit einem ein Gehäuse (24) einschließenden Handstück (20), einem mit Scherblättern (37, 38) versehenen Scherkopf (23) an dem vorderen Teil des Gehäuses, einem Motor (25) in dem Gehäuse und einem Getriebe (40) zur Übertragung des Antriebs vom Motor (15) zum Scherkopf (20), und mit vom Motor (15) angetriebenen Mitteln zur Förderung von Luft in das Gehäuse und nach vorne zu Auslässen (30, 32) an der Unterseite des Handstücks (20), dadurch gekennzeichnet, daß die in das Gehäuse eingesaugte Luft über das Getriebe (40) strömt und durch nach vorne gerichtete Auslässe (Auslaßmittel) (30, 32) ausströmt, die unmittelbar hinter den Scherblättern (37, 38) angeordnet sind, wobei die durch die Auslässe (30, 32) ausströmende Luft nach vorwärts, unterhalb der Scherblätter (37, 38) gerichtet ist.

2. Scherapparat nach Anspruch 1, dadurch gekennzeichnet, daß die Luft längs zwei Strömungswegen (P1, P2) zu den Auslässen (30, 32) strömt, wobei der eine Strömungsweg (P1) einen (kleinen) Teil der Luft direkt zu den Auslässen (30, 32) strömen läßt, während der andere Strömungsweg (P2) über/durch das Getriebe (40) führt.

3. Scherapparat nach Anspruch 1 oder 2, dadurch gekennzeichnet, daß die Auslaßmittel (2) seitlich nebeneinander angeordnete Auslässe (30), 32) aufweist.

4. Scherapparat nach Anspruch 3, dadurch gekennzeichnet, daß die beiden Auslässe (30, 32) durch einen Teiler bzw. durch einen Trennsteg (33) voneinander getrennt sind.

5. Scherapparat nach wenigstens einem der vorhergehenden Ansprüche, dadurch gekennzeichnet, daß der Scherkopf (23) an einem Adapter/Zwischenstück (22) angeordnet ist, der am vorderen Ende des Gehäuses (24) vorgesehen ist und das Getriebe (40) enthält, wobei die eingesaugte Luft durch das Zwischenstück (22) bzw. durch das in diesem untergebrachte Getriebe hindurchströmt.

6. Scherapparat nach Anspruch 5, dadurch gekennzeichnet, daß die Auslaßmittel (30, 32) zwischen dem Zwischenstück (22) und einem Teil des Scherkopfes (23) vorgesehen sind.

7. Scherapparat nach Anspruch 5 oder 6, dadurch gekennzeichnet, daß in dem Gehäuse (20) eine Vielzahl von Kanälen bzw. Auslaßkanälen (27) vorgesehen sind, welche die eingesaugte Luft an einer Vielzahl von Stellen in das Gehäuse führt.

8. Scherapparat nach wenigstens einem der Ansprüche 5—7, dadurch gekennzeichnet, daß das Zwischenstück (22) als eine Einstück-Einheit ausgebildet ist.

9. Scherapparat nach wenigstens einem der vorhergehenden Ansprüche, dadurch gekennzeichnet, daß der Strömungsweg der angesaugten Luft durch bzw. über den Motor (15) führt.

10. Scherapparat nach wenigstens einem der vorhergehenden Ansprüche, dadurch gekennzeichnet, daß der Motor (15) ein Elektromotor ist.

**Revendications**

1. Appareil de coupe équipé d'une poignée (20) comprenant un boîtier (24), une tête de coupe (23) avec des lames (37, 38) et supportée par une partie avant du boîtier, un moteur (15) logé dans le boîtier, un engrenage de transmission (40) agencé pout transmettre le mouvement du moteur (15) à la tête de coupe (20), un moyen (16) susceptible d'être entraîné par le moteur (15) pour injecter de l'air dans le boîtier en avant en direction d'un moyen de sortie (30, 32) situé au-dessous de la poignée et par lequel l'air injecté dans le boîtier est évacué, caractérisé par le fait que l'air injecté dans le boîtier passe sur l'engrenage de transmission et sort vers l'avant par le moyen de sortie disposé en face (30, 32), le moyen de sortie étant placé immédiatement derrière les lames (37, 38) de la tête de coupe de façon que l'air évacué par le moyen de sortie soit orienté en avant au-dessous des lames.

2. Appareil de coupe selon la revendication 1, caractérisé par le fait que l'air suit deux trajets (P1, P2) jusqu'au moyen de sortie, un premier trajet (P1) permettant à une certaine quantité d'air d'aller directement jusqu'au moyen de sortie et l'autre trajet (P2) orientant l'air vers le moyen de sortie (30, 32) de manière qu'il passe par dessus la transmission (40).

3. Appareil de coupe selon l'une des revendications 1 ou 2, caractérisé par le fait que le moyen de sortie comporte deux passages de sortie (30, 32) disposés côte à côte.

4. Appareil de coupe selon la revendication 3, caractérisé par le fait que les deux passages (30, 32) sont séparés par une cloison (33).

5. Appareil de coupe selon l'une quelconque des revendications précédentes, caractérisé par le fait que le tête de coupe (23) est montée sur un adaptateur (22), l'adaptateur étant installe à l'extrémité avant du boîtier et contenant l'engrenage de transmission, et par le fait que l'intérieur de l'adaptateur reçoit l'air injecté dans le boîtier.

6. Appareil de coupe selon la revendication 5, caractérisé par le fait que le moyen de sortie (30, 32) est délimité entre l'adaptateur (22) et une partie de la tête de coupe (23).

7. Appareil de coupe selon l'une des revendications 5 ou 6, caractérisé par le fait que le boîtier (20) délimite un ensemble d'ouvertures de sortie (27) qui introduisent de l'air à l'intérieur de l'adaptateur (22) en un certain nombre de positions différentes.

8. Appareil de coupe selon l'une des revendications 5 à 7, caractérisé par le fait que l'adaptateur (22) est construit en une seule pièce.

9. Appareil de coupe selon l'une quelconque des revendications précédentes, caractérisé par le fait que le moyen (16) pour injecter de l'air dans la poignée force l'air à passer sur le moteur (15).

10. Appareil de coupe selon l'une quelconque des revendications précédentes, caractérisé par le fait que le moteur est un moteur électrique (15).

FIG. 1.

FIG. 2.

FIG. 3.

FIG. 4.

FIG.5.

FIG. 6.

FIG. 7.